# EUROPEAN PATENT SPECIFICATION

(11) **EP 3 863 205 B1**
(45) Date of publication and mention of the grant of the patent: **24.05.2023**
(21) Application number: 20155818.6
(22) Date of filing: 06.02.2020
(51) Int. Cl.: H04L 5/00, H04W 72/00, H04W 28/00, H04W 4/06

(54) **SYSTEM AND METHOD OF DISTRIBUTING DATA FOR CARRIER AGGREGATION IN 5G BROADCASTING**
SYSTEM UND VERFAHREN ZUR VERTEILUNG VON DATEN ZUR TRÄGERAGGREGATION IM 5G-RUNDFUNK
SYSTÈME ET PROCÉDÉ DE DISTRIBUTION DE DONNÉES POUR AGRÉGATION DE PORTEUSES DANS UNE DIFFUSION 5G

(43) Date of publication of application: 11.08.2021
(73) Proprietor: Rohde & Schwarz GmbH & Co. KG, 81671 München (DE)
(72) Inventor: Oestreicher, Lars, 81671 München (DE)
(74) Representative: Prinz & Partner mbB

(56) References cited:
- EP-A1- 2 276 275
- WO-A1-2012/018781
- WO-A1-2019/236437
- US-A1- 2015 043 491
- US-A1- 2015 085 735

## Description

The invention relates to a system of distributing data for carrier aggregation in 5G broadcasting. Further, the invention relates to a method of distributing data for carrier aggregation in 5G broadcasting.

Nowadays, radio communication becomes more and more important in different technical fields. Therefore, new communication standards are under investigation that shall inter alia ensure proper communication. In mobile communication or rather telecommunication, a bidirectional communication is necessary that ensures communication in both directions, namely uplink communication as well as downlink communication. Recently, the communication standard 5G has been proposed that provides for the growing needs for mobile connectivity.

It is known that telecommunication or rather mobile communication uses carrier aggregation in order to increase the bandwidth, and thereby increase the bitrate. The carrier aggregation provided in telecommunication or rather mobile communication comprises different carriers for submitting the respective data, wherein these carriers are also called component carriers.

In telecommunication or rather mobile communication, it is a fundamental issue that the different carriers, which are used in carrier aggregation for telecommunication or rather mobile communication, relate to different categories, namely to a certain hierarchy. This means that only a single primary (component) carrier is always provided as well as at least one secondary (component) carrier. For exchanging data by means of carrier aggregation, it is necessary that the primary (component) carrier be received in any case, as only the primary (component) carrier comprises necessary control information. Then, the respective bandwidth or rather bitrate can be increased by receiving one or more of the secondary carrier(s). However, this concept used in telecommunication or rather mobile communication is not applicable for broadcasting.

WO 2019/236437 A1 shows such a carrier aggregation in telecommunication or mobile communication.

In US 2015/0085735 A1 and US 2015/0043491 A1, broadcast systems are shown that are used to transmit data from content sources to user equipment, wherein an additional communication via an IP network is established in case of failure during broadcasting.

EP 2 276 275 A1 describes a method of handling multimedia broadcast multicast service data reception on multiple component carriers for a mobile device in a wireless communication system.

WO 2012/018781 A1 shows an apparatus and method for transmitting a signal in a single frequency network.

Accordingly, there is a need for distributing the data assigned to at least one data stream to improve broadcasting, particularly to expand the usable bandwidth for broadcasting.

The invention is defined in the appended claims.

The invention provides a system of distributing data for carrier aggregation in 5G broadcasting. The system comprises an input for receiving at least one data stream to be emitted, at least one evolved packet core associated with the input, and at least one broadcast transmitter for emitting radio frequency signals. The at least one broadcast transmitter has at least one exciter. The at least one broadcast transmitter uses at least two carriers having the same category. Each of the at least two carriers comprises control information. The at least one evolved packet core is configured to control the at least one broadcast transmitter. The at least one evolved packet core is configured to distribute the data of the at least one data stream to the at least one broadcast transmitter based on information assigned to the at least one data stream to be emitted and/or based on information regarding configuration and capacity of the at least one broadcast transmitter.

Moreover, the invention provides a method of distributing data for carrier aggregation in 5G broadcasting, with the following steps:
- Receiving a data stream by means of at least one evolved packet core,
- Distributing the data stream based on information assigned to the data stream and/or based on information regarding configuration and capacity of at least one broadcast transmitter to be used for emitting the data stream, and
- Broadcasting the data stream via the at least one broadcast transmitter using at least two carriers having the same category, wherein each of the at least two carriers comprises control information.

Accordingly, the invention is based on the finding that data for 5G broadcasting can be distributed to at least two carriers having the same category. Hence, these at least two carriers are equal. This means that the respective carriers are interchangeable among each other. Accordingly, each of the carriers comprises all necessary information, which, according to the invention, is control information, namely signaling message. For instance, all control channels are transmitted by each carrier.

In other words, all of the carriers used in 5G broadcasting are fully configured. Thus, each of the carriers used can operate on a stand-alone basis. This is contrary to carrier aggregation in mobile communication or telecommunication wherein only one primary carrier is provided and the secondary carrier(s) cannot operate on a stand-alone basis.

Accordingly, all carriers may serve as "primary" (component) carrier for all receiving devices, for instance end devices. In contrast to carrier aggregation in mobile communication or telecommunication, each receiving device does not have only one "primary" carrier allocated, as each receiving device may have all carriers allocated.

In addition, the data assigned to the at least two carriers is separated from each other in the PHY layer (Physical Layer) as well as in the MAC layer (Medium Access Control Layer). Thus, the respective data is already separated in the MAC layer. This is ensured by means of the at least one evolved packet core that is located upstream of the at least one broadcast transmitter. In fact, the at least one evolved packet core is interconnected between the input and the at least one broadcast transmitter.

In contrast, carrier aggregation in telecommunication or mobile communication provides that the respective data is only separated in the PHY layer, but not in the MAC layer in which the respective data to be transmitted is scheduled on the different carriers.

Furthermore, the broadcast transmitter does not provide any uplink probabilities contrary to telecommunication or mobile communication. Hence, the broadcast transmitter is only used for broadcasting (downlink).

Accordingly, the entire system does not provide any uplink, as it relates to 5G broadcasting.

In fact, broadcasting channels having a bandwidth of 6 MHz or 8 MHz may be assigned to different frequency bands used by 5G. For instance, two 5G frequency bands having a bandwidth of 3 MHz can be used, resulting in 3 MHz + 3 MHz = 6 MHz. Moreover, one 5G frequency band with a bandwidth of 3 MHz and another 5G frequency band with a bandwidth of 5 MHz may be used, resulting in 3 MHz + 5 MHz = 8 MHz. The different 5G frequency bands may be used by means of carrier aggregation, wherein the data is previously distributed to the at least one broadcast transmitter using the different carriers assigned to the 5G frequency bands or rather broadcasting channels mentioned above.

Hence, the at least one broadcast transmitter provided is capable of carrier aggregation, for instance using two carriers on 5G frequency bands with 3 MHz and/or 5 MHz bandwidth.

Generally, the system may comprise more than one broadcast transmitter and/or more than one exciter. The more than one exciter may be assigned to one broadcast transmitter or rather to several broadcast transmitters. Thus, the bandwidth for broadcasting the data of the at least one data stream can be expanded by means of additional broadcast transmitters and/or exciters, particularly for bandwidths equal to or higher than 20 MHz.

Accordingly, the bandwidth of the system can be expanded in order to be enabled to broadcast Ultra High Definition (UHD) data streams and/or 8K video data streams.

The at least one evolved packet core may be configured to control a single frequency network comprising the at least one broadcast transmitter using the at least two carriers. Generally, a single frequency network is a broadcasting network in which several broadcast transmitters simultaneously send the same signal over the same channel, particularly the same multicast channel. The several broadcast transmitters are synchronized with each other in order to ensure to act as the single frequency network.

In fact, this can be ensured by means of the at least one evolved packet core.

In addition, carrier aggregation may take place for the different broadcast transmitters within the single frequency network, particularly intra-band aggregation. For this purpose, the at least one evolved packet core controls the different broadcast transmitters.

In case of several broadcast transmitters, each of the broadcast transmitters may be assigned to a respective carrier.

Furthermore, each of the broadcast transmitters may comprise two exciters.

Generally, the exciter comprises an oscillator, a modulator, an input processing means and optionally an audio processor.

Typically, the exciter is connected with an amplifier, particularly a high-power amplifier, which the exciter feeds.

When distributing the data of the data stream to the at least one broadcast transmitter, the respective data is distributed to the at least two carriers.

In general, the at least one evolved packet core communicates with external packet data networks, for instance the internet, private corporate networks or an Internet Protocol ("IP") multimedia subsystem.

The at least one evolved packet core only receives data via the input.

Generally, the 5G broadcasting may be restricted to a certain group of receiver (5G multicasting) and/or to a certain location (5G geocasting).

In fact, broadcasting is a method of transferring data to all recipients simultaneously. In multicasting, the data is transferred to a (pre-selected) group of recipients simultaneously, for instance a subgroup of all possible recipients. In geocasting, the data is transferred to a group of recipients in a network identified by their geographical locations.

According to an aspect, the information assigned to the data stream relates to data related information and/or content related information. The data related information might correspond to bandwidth, data rate, quality class identifier (QCI) and/or maximum allowable packet error rate. The content related information may correspond to the priority of the respective data stream and/or the kind of data, for instance a live video stream, acoustic data, image data and/or video data. Moreover, the content related information may correspond to the respective content of the data, for instance data concerning traffic warnings, lotto numbers, advertisement, stock exchange and/or temperatures. Accordingly, different information assigned to the data of the data stream may be considered by the at least one evolved packet core in order to distribute the data of the at least one data stream to the at least two carriers and to control the at least one broadcast transmitter, respectively.

Another aspect provides that the at least one evolved packet core is configured to process a manual input of an operator of the system and/or to execute an algorithm when distributing the data of the at least one data stream to the at least one broadcast transmitter. The operator of the system may allocate certain data of the data stream or rather the entire data of the data stream to at least one carrier, exciter and/or broadcast transmitter manually. This actually depends on the configuration of the system. However, the system itself is flexible in this regard such that the operator is enabled to customize the broadcasting to his specific needs.

Moreover, the operator may set the content related information used by the algorithm to distribute the data, for instance the priority of the respective data. In fact, the data is distributed in a certain manner depending on the priority set by the operator. For instance, a video live stream of a sports event such as a final match has the highest priority.

As mentioned above, the respective distribution may be done by means of the executed algorithm that takes certain information into account, particularly the data related information and/or the content related information, in order to distribute the data of the data stream based on this information. The information taken into account by the algorithm may be defined by the operator. Alternatively or additionally, this information is assigned to the respective data of the at least one data stream to be processed.

Generally, the algorithm may ensure an automatic processing.

The at least one evolved packet core may be configured to manage the at least two carriers used by the at least one broadcast transmitter. In other words, the at least one evolved packet core manages the at least two carriers with regard to the data to be emitted via the at least two carriers. For instance, the at least one evolved packet core assigns data of the at least one data stream to the respective carriers used for 5G broadcasting. This assignment may be based on the data related information and/or the content related information.

According to another aspect, the at least one evolved packet core and the at least one broadcast transmitter are connected with each other by a user plane via which content data is transmitted and/or by a control plane via which configuration data is transmitted. Put differently, the at least one evolved packet core may forward configuration data via the control plane to the at least one broadcast transmitter. Moreover, the at least one evolved packet core may forward content data via a user plane to the at least one broadcast transmitter.

Accordingly, the protocol architecture for LTE based 5G broadcasting can be separated into a control plane architecture and a user plane architecture. The user plane architecture may relate to a unidirectional communication, namely from the evolved packet core to the at least one broadcast transmitter. The control plane architecture may relate to a bidirectional communication between the evolved packet core and the at least one broadcast transmitter.

Particularly, it is ensured via the user plane that the data is distributed in a correct manner, particularly to the at least two different carriers.

The control plane ensures that the at least one broadcast transmitter using the at least two carriers is inter alia configured correctly such that the data of the data stream is emitted in the intended manner.

The user plane may be assigned to M 1 protocol, whereas the control plane can be assigned to M2 protocol. Both protocols are also called M1/SYNC protocol as well as M2AP, namely M2 Application Protocol.

Particularly, the at least one evolved packet core is configured to synchronize via the user plane the data of the at least one data stream. The at least one evolved packet core ensures that the entire data of the at least one data stream is distributed to the at least two carriers in a correct manner. For this purpose, the data distribution is synchronized appropriately by means of the at least one evolved packet core. Furthermore, the radio signals containing the data may be synchronized appropriately.

Moreover, the at least one evolved packet core may be configured to configure via the control plane the at least one broadcast transmitter for broadcasting the data stream. Thus, the at least one evolved packet core distributing the respective data to the at least two carriers ensures that the at least one broadcast transmitter using the carriers is set appropriately.

In general, it is determined by means of the control plane where the respective data should be sent to, whereas the respective data is transmitted by means of the user plane to the destination specified by the control plane.

In fact, the signal paths over which the data is transported are configured via the control plane. Then, the user plane ensures that the respective data is transmitted to the designated destinations by means of the signal paths configured.

Another aspect provides that the at least one broadcast transmitter may be configured to forward via the control plane at least one name, particularly at least one name suffix, to the at least one evolved packet core. In other words, the at least one broadcast transmitter forwards via the control plane at least one name, particularly at least one name suffix, to the at least one evolved packet core. Accordingly, the evolved packet core is enabled to address the respective broadcast transmitter correctly, particularly the assigned exciter(s) and/or the assigned carrier(s).

Moreover, the at least one evolved packet core may be configured to process the at least one name received from the at least one broadcast transmitter via the control plane in order to allocate the data of the at least one data stream to the at least one broadcast transmitter. Put differently, the at least one evolved packet core processes the at least one name received from the at least one broadcast transmitter in order to allocate the data to the at least one broadcast transmitter by taking the at least one name received into account. Accordingly, the information received, particularly the at least one name (suffix), is used to distribute the data correctly, for instance to the assigned exciter(s) and/or the assigned carrier(s).

For instance, each name (suffix) may unambiguously define the respective transmission component used for 5G broadcasting, namely the respective broadcast transmitter, its exciter as well as the respective carrier used by the exciter.

Hence, the data of the at least one data stream may be allocated to the at least one broadcast transmitter, particularly the carriers, according to a naming convention applied.

According to an embodiment, the at least one broadcast transmitter is a LTE-based 5G broadcast transmitter, particularly a FeMBMS emitter. FeMBMS (Further evolved multimedia broadcast multicast service) is a further development of the LTE broadcast mode eMBMS, which enables its entire transmission capacity to be used for broadcasting services.

In general, the at least one data stream may relate to at least two dedicated services, namely separate services, that are transmitted by means of the at least two carriers.

According to an aspect, the at least one broadcast transmitter forwards information about its configuration and its capacity via a control plane to the at least one evolved packet core. Thus, the at least one evolved packet core is configured to take this respective information into account to distribute the data of the at least one data stream in an appropriate manner.

Furthermore, the at least one data stream may be allocated to at least one multicast channel, particularly at least one multicast traffic channel, wherein the at least one multicast channel is assigned to one carrier or more carriers.

According to an embodiment, for each carrier, a multicast control channel, a service announcement about the allocation of the data, a temporary mobile group identifier and meta data are created. Particularly, the service announcement, the temporary mobile group identifier and the meta data are transmitted by means of at least one carrier, particularly by means of a single carrier or several carriers.

In a specific case, the data of the at least one data stream is distributed via several carriers. The data stream is transmitted by a single multicast channel per carrier, which comprises a temporary mobile group identifier that is identical for all carriers.

Another aspect provides that a single data stream is distributed over several carriers, wherein the data stream is transmitted via a single multicast channel per carrier, particularly a single multicast transport channel. Thus, the data of the single data stream, which may encompass more than one service, particularly two separate services, can be broadcasted by more than one carrier.

Particularly, the data stream is assigned to a temporary mobile group identifier that is identical in the multicast channel and service announcement.

The at least one broadcast transmitter may comprise two exciters.

Each exciter may be assigned to two different carriers.

At least two broadcast transmitters may be provided.

Each broadcast transmitter may comprise two exciters.

Each exciter may be assigned to a specific carrier.

The exciters of a single broadcast transmitter may be assigned to the same carrier.

Based on the name (suffix), the at least one evolved packet core controls only the at least one broadcast transmitter, particularly the exciter(s), that shall receive data to be broadcasted by the respective carriers.

Generally, the evolved packet core ensures that at least one data stream is assigned to at least one multicast channel in at least one carrier.

As already mentioned above, a single frequency network can be established having several broadcast transmitters.

Particularly, a dual-drive redundancy can be achieved, as two exciters (per broadcast transmitter) are provided.

The foregoing aspects and many of the attendant advantages of the claimed subject matter will become more readily appreciated as the same become better understood by reference to the following detailed description, when taken in conjunction with the accompanying drawings, wherein:
- Figure 1 shows a first embodiment of a system of distributing data for carrier aggregation in 5G broadcasting according to the invention,
- Figure 2 shows a second embodiment of a system of distributing data for carrier aggregation in 5G broadcasting according to the invention, and
- Figure 3 shows a flow-chart illustrating a method of distributing data for carrier aggregation in 5G broadcasting according to the invention.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

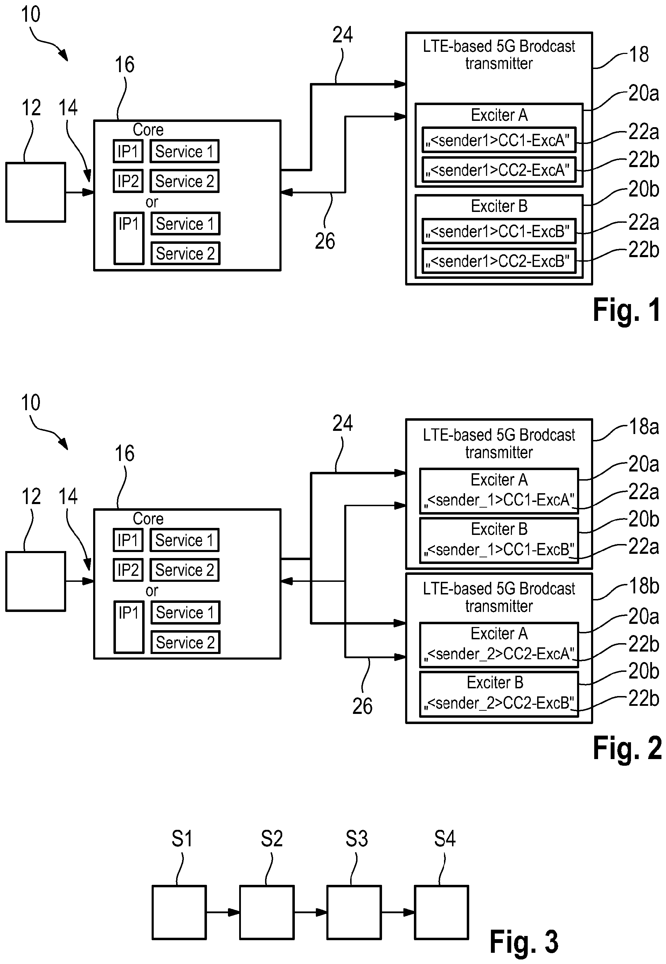

In Figure 1, a system 10 of distributing data for carrier aggregation in 5G broadcasting is shown, which comprises a data source 12, for instance an external packet data network such as the internet, a private corporate network or an Internet Protocol ("IP") multimedia subsystem.

The data source 12 is connected with an input 14 for receiving at least one data stream to be emitted from the data source 12.

The input 14 is connected with at least one evolved packet core 16 that inter alia processes the data received via the input 14 from the data source 12.

In the shown embodiment, the system 10 further comprises one broadcast transmitter 18 for emitting radio frequency signals, namely for broadcasting purposes.

In the shown embodiment, the single broadcast transmitter 18 comprises two exciters 20, namely a first exciter 20a and a second exciter 20b.

Each exciter 20 is assigned to two carriers 22 having the same category.

Even though the carriers 22 have the same category, they are labelled with 22a and 22b for distinguishing purposes.

The evolved packet core 16 and the broadcast transmitter 18 are interconnected with each other by a user plane 24 via which content data is transmitted as well as a control plane 26 via which configuration data is transmitted.

Furthermore, Figure 1 reveals that the evolved packet core 16 may receive a single data stream indicated by "IP1" or two separate data streams indicated by "IP1, IP2". However, the evolved packet core 16 may receive two separate services in any case, which are labelled by "Service 1" and "Service 2".

These services are distributed to the broadcast transmitter 18 in a certain manner, particularly the carriers 22.

In the shown embodiment, the first service labelled by "Service 1" is assigned to the respective second carrier 22b assigned to each exciter 20, whereas the second service labelled by "Service 2" is assigned to the respective first carrier 22a assigned to each exciter 20.

For distributing the data assigned to the services to the carriers 22 correctly, the broadcast transmitter 18 provides respective information to the evolved packet core 16 by means of the control plane 26, wherein the respective information is processed by the evolved packet core 16.

Accordingly, the evolved packet core 16 distributes the data based on information regarding configuration and capacity of the at least one broadcast transmitter 18.

Furthermore, the evolved packet core 16 may take information into account that relates to the at least one data stream. For instance, data related information, particularly bandwidth, data rate, quality class identifier (QCI) and/or maximum allowable packet error rate, and/or content related information are taken into account, particularly priority, live video stream, acoustic data, image data and/or video data.

Therefore, the evolved packet core 16 can ensure that the best broadcasting properties can be achieved while taking information assigned to the at least one data stream and information regarding the broadcast transmitter 18 into account.

The respective information assigned to the at least one data stream may be set by an operator of the system 10. Alternatively or additionally, the evolved packet core 16 may execute an algorithm that determines how the respective data is distributed among the different carriers 22.

Accordingly, the evolved packet core 16 manages the different carriers 22 that are used by the broadcast transmitter 18, particularly its exciters 20. The evolved packet core 16 also ensures that the data of the at least one data stream is synchronized while being distributed via the user plane 24 to the different exciters 20 for being transmitted by the respective carriers 22.

In this regard, the evolved packet core 16 configures the broadcast transmitter 18, namely its exciters 20, for broadcasting the data of the at least one data stream.

Previously, the evolved packet core 16 has received respective information from the broadcast transmitter 18, particularly its exciters 20, which can be used for distributing or rather allocating the data of the at least one data stream in an efficient manner.

Thus, the broadcast transmitter 18 forwards via the control plane 26 at least one name (suffix) to the at least one evolved packet core 16, which ensures to identify the respective combination of broadcast transmitter 18, exciter 20 as well as carrier 22.

This is also illustrated in Figure 1 by "<sender1>-CC1-ExcA" for the first (and only) broadcast transmitter 18, its first exciter 20a labelled by "ExcA" as well as the first carrier 22a labelled by "CC1". Moreover, the name (suffix) "<sender1>-CC2-ExcB" relates to the first (and only) broadcast transmitter 18, its second exciter 20b labelled by "ExcB" as well as the second carrier 22b labelled by "CC2".

In addition to the respective name (suffix), the broadcast transmitter 18 forwards the capacity information to the evolved packet core 16.

Then, the evolved packet core 16 processes the at least one name (suffix) and the associated information received in order to allocate the data of the at least one data stream to the at least one broadcast transmitter 18, particularly its exciter(s) 20 and the carrier(s) 22.

In general, the broadcast transmitter 18 may relate to a LTE-based 5G broadcast transmitter, particularly a FeMBMS emitter.

In Figure 2, a second embodiment of the system 10 is shown that differs from the first embodiment in that two broadcast transmitters 18 are connected with the evolved packet core 16, namely a first broadcast transmitter 18a and a second broadcast transmitter 18b.

Again, each broadcast transmitter 18 comprises a first exciter 20a and a second exciter 20b.

However, the exciters 20 of the first broadcast transmitter 18a are both assigned to the first carrier 22a, whereas the exciters 20 of the second broadcast transmitter 18b are both assigned to the second carrier 22b.

This becomes also obvious when taking the respective name (suffix) into account. For instance, "<sender1>-CC1-ExcA" identifies the first broadcast transmitter 18a, its first exciter 20a labelled by "ExcA" as well as the first carrier 22a labelled by "CC1", whereas "<sender2>-CC2-ExcA" defines the second broadcast transmitter 18b, its first exciter 20a labelled by "ExcA" as well as the second carrier 22a labelled by "CC1".

In any case, the evolved packet core 16 receives the data stream(s) in a first step S1 as indicated in Figure 3. Moreover, information assigned to the at least one data stream may be received that can be set by the operator of the system 10 or rather already assigned to the data.

In a second step S2, the evolved packet core 16 receives information form the broadcast transmitter(s) 18 via the control plane 26. This information received concerns information about the configuration and the capacity of the broadcast transmitter(s) 18, particularly the exciter(s) 20 and/or the respective carrier(s) 22 used. Hence, the broadcast transmitter(s) 18 forward(s) at least one name (suffix) assigned to the respective combination of the specific broadcast transmitter 18, its exciter 20 and the carrier 22.

In a third step S3, the evolved packet core 16 processes the information received in order to distribute the data to the broadcast transmitter(s) 18, particularly the exciter(s) 20 and/or carrier(s) 22. Accordingly, the data to be broadcasted is forwarded to the broadcast transmitter(s) 18 via the user plane 24. When distributing the data or previously, the evolved packet core 16 also forwards configuration data to the broadcast transmitter(s) 18 via the control plane 26.

In a fourth step S4, the data of the data stream(s), which may be assigned to different (separate) services, is broadcasted via the broadcast transmitter(s) 18 wherein at least two carriers 22 are used that have the same category.

Generally, a multicast control channel, a service announcement about the allocation of the data, a temporary mobile group identifier and/or meta data are created for each carrier 22. In fact, the service announcement, the temporary mobile group identifier and the meta data are transmitted by means of the carrier 22.

As also shown in Figures 1 and 2, a single data stream can be distributed over several carriers 22. As the at least one data stream is allocated to at least one multicast channel, the data stream may be transmitted via a single multicast channel per carrier 22.

## Claims

1. A system of distributing data for carrier aggregation in 5G broadcasting, comprising:
- an input (14) configured to receive at least one data stream to be broadcasted,
- at least one evolved packet core (16) associated with the input (14), and
- at least one broadcast transmitter (18) configured to broadcast radio frequency signals,
wherein the at least one broadcast transmitter (18) has at least one exciter (20), wherein the at least one broadcast transmitter (18) uses at least two component carriers (22) having the same category such that the respective component carriers (22) are interchangeable among each other, wherein each of the at least two component carriers (22) comprises control information,
wherein the at least one evolved packet core (16) is configured to control the at least one broadcast transmitter (18), and
wherein the at least one evolved packet core (16) is configured to distribute the data of the at least one data stream to the at least one broadcast transmitter (18) based on information assigned to the at least one data stream and/or based on information regarding configuration and capacity of the at least one broadcast transmitter (18).

2. The system according to claim 1, wherein the information assigned to the data stream relates to data related information, particularly bandwidth, data rate and/or maximum allowable packet error rate, quality class identifier and/or content related information, particularly priority, live video stream, acoustic data, image data and/or video data, for instance data concerning traffic warnings, lotto numbers, advertisement, stock exchange and/or temperatures.

3. The system according to claim 1 or 2, wherein the at least one evolved packet core (16) is configured to process a manual input of an operator of the system (10) and/or to execute an algorithm when distributing the data of the at least one data stream to the at least one broadcast transmitter (18).

4. The system according to any of the preceding claims, wherein the at least one evolved packet core (16) is configured to manage the at least two component carriers (22) used by the at least one broadcast transmitter (18).

5. The system according to any of the preceding claims, wherein the at least one evolved packet core (16) and the at least one broadcast transmitter (18) are connected with each other by a user plane (24) via which content data is transmitted and/or by a control plane (26) via which configuration data is transmitted.

6. The system according to claim 5, wherein the at least one evolved packet core (16) is configured to synchronize via the user plane (24) the data of the at least one data stream and/or wherein the at least one evolved packet core (16) is configured to configure via the control plane (26) the at least one broadcast transmitter (18) for broadcasting the data stream.

7. The system according to claim 5 or 6, wherein the at least one broadcast transmitter (18) is configured to forward via the control plane (26) at least one name, particularly at least one name suffix, to the at least one evolved packet core (16), in particular wherein the at least one evolved packet core (16) is configured to process the at least one name received from the at least one broadcast transmitter (18) via the control plane (26) in order to allocate the data of the at least one data stream to the at least one broadcast transmitter (18).

8. The system according to any of the preceding claims, wherein the at least one broadcast transmitter (18) is a LTE-based 5G broadcast transmitter, particularly a FeMBMS emitter.

9. A method of distributing data for carrier aggregation in 5G broadcasting, with the following steps:
- Receiving a data stream by means of at least one evolved packet core (16),
- Distributing the data stream based on information assigned to the data stream and/or based on information regarding configuration and capacity of at least one broadcast transmitter (18) to be used for emitting the data stream, and
- Broadcasting the data stream via the at least one broadcast transmitter (18) using at least two component carriers (22) having the same category such that the respective component carriers (22) are interchangeable among each other, wherein each of the at least two component carriers (22) comprises control information.

10. The method according to claim 9, wherein the at least one broadcast transmitter (18) forwards information about its configuration and its capacity via a control plane (26) to the at least one evolved packet core (16), and/or wherein the at least one evolved packet core (16) forwards configuration data via the control plane (26) to the at least one broadcast transmitter (18), and/or wherein the at least one evolved packet core (16) forwards content data via a user plane (24) to the at least one broadcast transmitter (18).

11. The method according to claim 10, wherein the at least one broadcast transmitter (18) forwards via the control plane (26) at least one name, particularly at least one name suffix, to the at least one evolved packet core (16), and wherein the at least one evolved packet core (16) processes the at least one name received from the at least one broadcast transmitter (18) in order to allocate the data to the at least one broadcast transmitter (18).

12. The method according to any of claims 9 to 11, wherein the at least one evolved packet core (16) manages the at least two component carriers (22) with regard to the data to be emitted via the at least two component carriers (22).

13. The method according to any of claims 9 to 12, wherein the at least one data stream is allocated to at least one multicast channel, particularly at least one multicast traffic channel, wherein the at least one multicast channel is assigned to one component carrier (22) or more component carriers (22).

14. The method according to any of claims 9 to 13, wherein, for each component carrier (22), a multicast control channel, a service announcement about the allocation of the data, a temporary mobile group identifier and meta data are created, in particular wherein the service announcement, the temporary mobile group identifier and the meta data are transmitted by means of the at least one component carrier (22).

15. The method according to any of claims 9 to 14, wherein a single data stream is distributed over several component carriers (22), wherein the data stream is transmitted via a single multicast channel per component carrier (22), particularly a single multicast transport channel, in particular wherein the data stream is assigned to a temporary mobile group identifier that is identical in the multicast channel and service announcement.

## Patentansprüche

1. System zum Verteilen von Daten für eine Trägeraggregation im 5G-Broadcasting, das Folgendes umfasst:
- einen Eingang (14), der dazu ausgelegt ist, mindestens einen zu übermittelnden Datenstrom zu empfangen,
- mindestens einen entwickelten Paketkern (16), der mit dem Eingang (14) verknüpft ist, und
- mindestens einen Broadcastsender (18), der dazu ausgelegt ist, Funkfrequenzsignale zu übermitteln,
wobei der mindestens eine Broadcastsender (18) mindestens einen Erreger (20) aufweist, wobei der mindestens eine Broadcastsender (18) mindestens zwei Komponententräger (22), die dieselbe Kategorie aufweisen, verwendet, derart, dass die jeweiligen Komponententräger (22) untereinander austauschbar sind, wobei jeder der mindestens zwei Komponententräger (22) Steuerinformationen umfasst,
wobei der mindestens eine entwickelte Paketkern (16) dazu ausgelegt ist, den mindestens einen Broadcastsender (18) zu steuern, und
wobei der mindestens eine entwickelte Paketkern (16) dazu ausgelegt ist, die Daten des mindestens einen Datenstroms auf Basis von Informationen, die dem mindestens einen Datenstrom zugewiesen sind, und/oder auf Basis von Informationen über eine Auslegung und Kapazität des mindestens einen Broadcastsenders (18) an den mindestens einen Broadcastsender (18) zu verteilen.

2. System nach Anspruch 1, wobei die Informationen, die dem Datenstrom zugewiesen sind, datenbezogene Informationen betreffen, insbesondere Bandbreite, Datenrate und/oder maximal zulässige Paketfehlerrate, Qualitätsklassenkennung und/oder inhaltsbezogene Informationen, insbesondere Priorität, Livevideostream, akustische Daten, Bilddaten und/oder Videodaten, beispielsweise Daten über Verkehrswarnungen, Lottozahlen, Werbung, Börse und/oder Temperaturen.

3. system nach Anspruch 1 oder 2, wobei der mindestens eine entwickelte Paketkern (16) dazu ausgelegt ist, eine manuelle Eingabe eines Bedieners des Systems (10) zu verarbeiten und/oder einen Algorithmus auszuführen, wenn die Daten des mindestens einen Datenstroms an den mindestens einen Broadcastsender (18) verteilt werden.

4. System nach einem der vorhergehenden Ansprüche, wobei der mindestens eine entwickelte Paketkern (16) dazu ausgelegt ist, die die von dem mindestens einen Broadcastsender (18) verwendeten mindestens zwei Komponententräger (22) zu verwalten.

5. System nach einem der vorhergehenden Ansprüche, wobei der mindestens eine entwickelte Paketkern (16) und der mindestens eine Broadcastsender (18) durch eine Benutzerebene (24), via die Inhaltsdaten übertragen werden, und/oder durch eine Steuerebene (26), via die Auslegungsdaten übermittelt werden, miteinander verbunden sind.

6. System nach Anspruch 5, wobei der mindestens eine entwickelte Paketkern (16) dazu ausgelegt ist, die Daten des mindestens einen Datenstroms via die Benutzerebene (24) zu synchronisieren, und/oder wobei der mindestens eine entwickelte Paketkern (16) dazu ausgelegt ist, den mindestens einen Broadcastsender (18) zum Übermitteln des Datenstroms via die Steuerebene (26) auszulegen.

7. System nach Anspruch 5 oder 6, wobei der mindestens eine Broadcastsender (18) dazu ausgelegt ist, mindestens einen Namen, insbesondere mindestens ein Namenssuffix, via die Steuerebene (26) an den mindestens einen entwickelten Paketkern (16) weiterzuleiten, insbesondere wobei der mindestens eine entwickelte Paketkern (16) dazu ausgelegt ist, den mindestens einen Namen, der von dem mindestens einen Broadcastsender (18) empfangen wird, via die Steuerebene (26) zu verarbeiten, um die Daten des mindestens einen Datenstroms dem mindestens einen Broadcastsender (18) zuzuteilen.

8. System nach einem der vorhergehenden Ansprüche, wobei der mindestens eine Broadcastsender (18) ein LTE-basierter 5G-Broadcastsender ist, insbesondere ein FeMBMS-Emitter.

9. Verfahren zum Verteilen von Daten für eine Trägeraggregation im 5G-Broadcasting mit den folgenden Schritten:
- Empfangen eines Datenstroms mittels mindestens eines entwickelten Paketkerns (16),
- Verteilen des Datenstroms auf Basis von Informationen, die dem Datenstrom zugewiesen sind, und/oder auf Basis von Informationen über eine Auslegung und Kapazität des mindestens einen Broadcastsenders (18), der zum Emittieren des Datenstroms zu verwenden ist, und
- Übermitteln des Datenstroms via den mindestens einen Broadcastsender (18) unter Verwendung von mindestens zwei Komponententrägern (22), die dieselbe Kategorie aufweisen, derart, dass die jeweiligen Komponententräger (22) untereinander austauschbar sind, wobei jeder der mindestens zwei Komponententräger (22) Steuerinformationen umfasst.

10. Verfahren nach Anspruch 9, wobei der mindestens eine Broadcastsender (18) Informationen über seine Auslegung und seine Kapazität via eine Steuerebene (26) an den mindestens einen entwickelten Paketkern (16) weiterleitet und/oder wobei der mindestens eine entwickelte Paketkern (16) Auslegungsdaten via die Steuerebene (26) an den mindestens einen Broadcastsender (18) weiterleitet und/oder wobei der mindestens eine entwickelte Paketkern (16) Inhaltsdaten via eine Benutzerebene (24) an den mindestens einen Broadcastsender (18) weiterleitet.

11. Verfahren nach Anspruch 10, wobei der mindestens eine Broadcastsender (18) mindestens einen Namen, insbesondere mindestens ein Namenssuffix, via die Steuerebene (26) zu dem mindestens einen entwickelten Paketkern (16) weiterleitet und wobei der mindestens eine entwickelte Paketkern (16) den von dem mindestens einen Broadcastsender (18) empfangenen mindestens einen Namen verarbeitet, um die Daten dem mindestens einen Broadcastsender (18) zuzuteilen.

12. Verfahren nach einem der Ansprüche 9 bis 11, wobei der mindestens eine entwickelte Paketkern (16) die mindestens zwei Komponententräger (22) mit Bezug auf die via die mindestens zwei Komponententräger (22) zu emittierenden Daten verwaltet.

13. Verfahren nach einem der Ansprüche 9 bis 12, wobei der mindestens eine Datenstrom mindestens einem Multicastkanal zugeteilt wird, insbesondere einem Multicastverkehrskanal, wobei der mindestens eine Multicastkanal einem Komponententräger (22) oder mehreren Komponententrägern (22) zugewiesen wird.

14. Verfahren nach einem der Ansprüche 9 bis 13, wobei für jeden Komponententräger (22) ein Multicaststeuerkanal, eine Dienstankündigung über die Zuteilung der Daten, eine temporäre Mobilfunkgruppenkennung und Metadaten erstellt werden, insbesondere wobei die Dienstankündigung, die temporäre Mobilfunkgruppenkennung und die Metadaten mittels des mindestens einen Komponententrägers (22) übertragen werden.

15. Verfahren nach einem der Ansprüche 9 bis 14, wobei ein einzelner Datenstrom über mehrere Komponententräger (22) verteilt wird, wobei der Datenstrom via einen einzelnen Multicastkanal je Komponententräger (22) übertragen wird, insbesondere einen einzelnen Multicasttransportkanal, insbesondere wobei der Datenstrom einer temporären Mobilfunkgruppenkennung zugewiesen wird, die im Multicastkanal und in der Dienstankündigung identisch ist.

## Revendications

1. Système de distribution de données pour une agrégation de porteuses dans une diffusion 5G, comprenant :
- une entrée (14) configurée pour recevoir au moins un flux de données à diffuser,
- au moins un cœur de paquet évolué (16) associé à l'entrée (14), et
- au moins un émetteur de diffusion (18) configuré pour diffuser des signaux de radiofréquence,
dans lequel l'au moins un émetteur de diffusion (18) a au moins un excitateur (20), dans lequel l'au moins un émetteur de diffusion (18) utilise au moins deux porteuses composantes (22) ayant la même catégorie de sorte que les porteuses composantes (22) respectives soient interchangeables entre elles, dans lequel chacune des au moins deux porteuses composantes (22) comprend des informations de commande,
dans lequel l'au moins un cœur de paquet évolué (16) est configuré pour commander l'au moins un émetteur de diffusion (18), et
dans lequel l'au moins un cœur de paquet évolué (16) est configuré pour distribuer les données de l'au moins un flux de données à l'au moins un émetteur de diffusion (18) sur la base d'informations attribuées à l'au moins un flux de données et/ou sur la base d'informations concernant la configuration et la capacité de l'au moins un émetteur de diffusion (18).

2. Système selon la revendication 1, dans lequel les informations attribuées au flux de données concernent des informations relatives aux données, en particulier une bande passante, un débit de données et/ou un taux d'erreur de paquet maximum autorisé, un identifiant de classe de qualité et/ou des informations relatives au contenu, en particulier la priorité, un flux vidéo en direct, des données acoustiques, des données d'image et/ou des données vidéo, notamment des données concernant des avertissements de trafic, des numéros de loto, de la publicité, la Bourse et/ou les températures.

3. Système selon la revendication 1 ou 2, dans lequel l'au moins un cœur de paquet évolué (16) est configuré pour traiter une entrée manuelle d'un opérateur du système (10) et/ou pour exécuter un algorithme lors de la distribution des données de l'au moins un flux de données à l'au moins un émetteur de diffusion (18).

4. Système selon l'une quelconque des revendications précédentes, dans lequel l'au moins un cœur de paquet évolué (16) est configuré pour gérer les au moins deux porteuses composantes (22) utilisées par l'au moins un émetteur de diffusion (18).

5. Système selon l'une quelconque des revendications précédentes, dans lequel l'au moins un cœur de paquet évolué (16) et l'au moins un émetteur de diffusion (18) sont connectés l'un à l'autre par un plan utilisateur (24) via lequel des données de contenu sont transmises, et/ou par un plan de commande (26) via lequel des données de configuration sont transmises.

6. Système selon la revendication 5, dans lequel l'au moins un cœur de paquet évolué (16) est configuré pour synchroniser les données de l'au moins un flux de données via le plan utilisateur (24), et/ou dans lequel l'au moins un cœur de paquet évolué (16) est configuré pour configurer l'au moins un émetteur de diffusion (18) via le plan de commande (26) pour diffuser le flux de données.

7. Système selon la revendication 5 ou 6, dans lequel l'au moins un émetteur de diffusion (18) est configuré pour transférer, via le plan de commande (26), au moins un nom, en particulier au moins un suffixe de nom, à l'au moins un cœur de paquet évolué (16), en particulier dans lequel l'au moins un cœur de paquet évolué (16) est configuré pour traiter l'au moins un nom reçu de l'au moins un émetteur de diffusion (18) via le plan de commande (26) afin d'attribuer les données de l'au moins un flux de données à l'au moins un émetteur de diffusion (18).

8. Système selon l'une quelconque des revendications précédentes, dans lequel l'au moins un émetteur de diffusion (18) est un émetteur de diffusion 5G basé sur LTE, en particulier un émetteur FeMBMS.

9. Procédé de distribution de données pour une agrégation de porteuses dans une diffusion 5G, ayant les étapes suivantes :
- recevoir un flux de données au moyen d'au moins un cœur de paquet évolué (16),
- distribuer le flux de données sur la base d'informations attribuées au flux de données et/ou sur la base d'informations concernant la configuration et la capacité d'au moins un émetteur de diffusion (18) à utiliser pour émettre le flux de données, et
- diffuser le flux de données via l'au moins un émetteur de diffusion (18) en utilisant au moins deux porteuses composantes (22) ayant la même catégorie de sorte que les porteuses composantes (22) respectives soient interchangeables entre elles, dans lequel chacune des au moins deux porteuses composantes (22) comprend des informations de commande.

10. Procédé selon la revendication 9, dans lequel l'au moins un émetteur de diffusion (18) transfère des informations sur sa configuration et sa capacité via un plan de commande (26) à l'au moins un cœur de paquet évolué (16), et/ou dans lequel l'au moins un cœur de paquet évolué (16) transfère des données de configuration via le plan de commande (26) à l'au moins un émetteur de diffusion (18), et/ou dans lequel l'au moins un cœur de paquet évolué (16) transfère des données de contenu via un plan utilisateur (24) à l'au moins un émetteur de diffusion (18).

11. Procédé selon la revendication 10, dans lequel l'au moins un émetteur de diffusion (18) transfère, via le plan de commande (26), au moins un nom, en particulier au moins un suffixe de nom, à l'au moins un cœur de paquet évolué (16), et dans lequel l'au moins un cœur de paquet évolué (16) traite l'au moins un nom reçu de l'au moins un émetteur de diffusion (18) afin d'attribuer les données à l'au moins un émetteur de diffusion (18).

12. Procédé selon l'une quelconque des revendications 9 à 11, dans lequel l'au moins un cœur de paquet évolué (16) gère les au moins deux porteuses composantes (22) en ce qui concerne les données à émettre via les au moins deux porteuses composantes (22).

13. Procédé selon l'une quelconque des revendications 9 à 12, dans lequel l'au moins un flux de données est attribué à au moins un canal de multidiffusion, en particulier au moins un canal de trafic de multidiffusion, dans lequel l'au moins un canal de multidiffusion est attribué à une porteuse composante (22) ou à plusieurs porteuses composantes (22).

14. Procédé selon l'une quelconque des revendications 9 à 13, dans lequel, pour chaque porteuse composante (22), un canal de commande de multidiffusion, une annonce de service sur l'attribution des données, un identifiant de groupe mobile temporaire et des métadonnées sont créés, en particulier dans lequel l'annonce de service, l'identifiant de groupe mobile temporaire et les métadonnées sont transmis au moyen de l'au moins une porteuse composante (22).

15. Procédé selon l'une quelconque des revendications 9 à 14, dans lequel un seul flux de données est distribué sur plusieurs porteuses composantes (22), dans lequel le flux de données est transmis via un seul canal de multidiffusion par porteuse composante (22), en particulier un seul canal de transport de multidiffusion, en particulier dans lequel le flux de données est attribué à un identifiant de groupe mobile temporaire qui est le même dans le canal de multidiffusion et l'annonce de service.
